(19) Europäisches Patentamt
European Patent Office
Office européen des brevets

(11) **EP 4 029 963 A1**

(12) **EUROPEAN PATENT APPLICATION**
published in accordance with Art. 153(4) EPC

(43) Date of publication:
**20.07.2022 Bulletin 2022/29**

(21) Application number: **21869501.3**

(22) Date of filing: **14.04.2021**

(51) International Patent Classification (IPC):
**C22C 38/58** (2006.01)  **C22C 1/02** (2006.01)
**C21D 8/02** (2006.01)

(52) Cooperative Patent Classification (CPC):
**C21D 8/02; C22C 1/02; C22C 38/58**

(86) International application number:
**PCT/KR2021/004720**

(87) International publication number:
**WO 2022/059877 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 KR 20200120459**

(71) Applicant: **Korea Advanced Institute of Science and Technology**
**Daejeon 34141 (KR)**

(72) Inventors:
• **JANG, Changheui**
**Daejeon 34141 (KR)**
• **SHIN, Jiho**
**Daejeon 34141 (KR)**
• **KONG, Byeongseo**
**Daejeon 34141 (KR)**
• **JEONG, Chaewon**
**Daejeon 34141 (KR)**
• **EOM, Hyunjoon**
**Daejeon 34141 (KR)**

(74) Representative: **Manitz Finsterwald**
**Patent- und Rechtsanwaltspartnerschaft mbB**
**Martin-Greif-Strasse 1**
**80336 München (DE)**

(54) **REDUCED-ACTIVATION AUSTENITIC STAINLESS STEEL CONTAINING TANTALUM AND MANUFACTURING METHOD THEREFOR**

(57) There is provided an austenitic stainless steel containing 14 to 19 wt.% of chromium (Cr), 2 to 10 wt.% of nickel (Ni), 2 to 20 wt.% of manganese (Mn), 0.01 to 0.1 wt.% of carbon (C), and 0.1 to 1 wt.% of tantalum (Ta), wherein the austenitic stainless steel has an austenitic matrix structure, fine tantalum carbide (TaC) is precipitated in the austenitic matrix structure, and the fine tantalum carbide is uniformly dispersed in the austenitic matrix structure.

FIG. 1

EP 4 029 963 A1

**Description**

**[Technical Field]**

Provided are reduced-activation austenitic stainless steel containing tantalum and a method of manufacturing the same.

**[Background Art]**

Among various parts constituting a nuclear fusion reactor, a blanket plays an important role in recovering thermal energy generated in production and fusion reaction of tritium and shielding a structure from radiation. An internal structure among components of the blanket includes a wall supporting a structure of a test blanket module (TBM), a container containing a breeder, and a path through which a coolant may be circulated.

The blanket, one of the main parts of the nuclear fusion reactor, is a core part adjacent to plasma. Since the blanket plays a role in shielding neutrons while converting the kinetic energy of the neutrons generated in a nuclear fusion reaction into thermal energy, it is required for the blanket to maintain an excellent performance in a high neutron flux and heat flux environment. Therefore, in order to commercialize the nuclear fusion power generation, which is expected as clean future energy, it is essential to develop a material that may withstand the high neutron flux and heat flux environment caused by an ultra-high-temperature plasma nuclear fusion reaction.

A structural material for a nuclear fusion reactor used in harsh conditions should have excellent high-temperature physical properties and low swelling at a high neutron irradiation dose, and should be easily compatible with surrounding components (a coolant, a breeder, and the like) and easily produced into a large structure industrially and economically. In particular, when the nuclear fusion reactor material development program began in the mid-1980s in the United States, the concept of a reduced-activation steel was introduced, and a limit value of an alloying element was suggested to reduce generation of long-lived high-level radioactive materials generated by high-energy (14 MeV) neutron irradiation.

As candidate materials currently being researched and developed in consideration of the structural material conditions described above, a ferritic-martensitic (FM) steel, an oxide dispersion strengthened (ODS) steel, and the like are being considered. In particular, the FM steel has excellent swelling resistance, excellent corrosion resistance in a liquid metal, and excellent resistance to thermal stress due to a low coefficient of thermal expansion. However, at a low temperature, the FM steel has problems such as irradiation hardening, an increase in fracture toughness transition temperature due to irradiation, and a change in fracture properties due to helium and hydrogen. In addition, at a high temperature, the FM steel has problems such as a decrease in creep strength, helium-induced embrittlement, and grain boundary embrittlement. Thus, a maximum operating temperature of the FM steel may be limited to 550°C or lower, and accordingly, the operating efficiency of the nuclear fusion reactor may be decreased.

In order to solve these problems, a reduced-activation ferritic-martensitic oxide dispersion strengthened steel (FM-ODS steel) in which oxide is dispersed in an FM steel has been developed. $Y_2O_3$, which is known as an optimal material of a dispersion strengthening oxide, allows the operating temperature to increase to 650°C, such that the operating efficiency may be increased compared to the existing FM steel. However, the FM-ODS steel has a high manufacturing cost due to a complicated manufacturing process and has limitations in ideally uniformly dispersing oxides. In addition, it is difficult to apply the FM-ODS steel to production of a large structure because the FM-ODS steel is still in the research and development stage.

In addition, since the FM steel and the FM-ODS steel are ferromagnetic substances having a magnetic property with a body-centered cubic (BCC) structure, the FM steel and the FM-ODS steel may affect a magnetic field and plasma control and cause difficulties in design of a nuclear fusion reactor.

**[Disclosure]**

**[Technical Problem]**

The present invention has been made in an effort to provide a reduced-activation austenitic stainless steel containing tantalum and a method of manufacturing the same having advantages of forming a paramagnetic substance having no magnetic property in a matrix having a face-centered cubic (FCC) austenite phase.

The present invention has been made in an effort to provide a reduced-activation austenitic stainless steel containing tantalum and a method of manufacturing the same having advantages of improving reduced-activation properties by addition of manganese and tantalum by strictly limiting addition of molybdenum, niobium, nickel, copper, and nitrogen in an austenitic stainless steel.

The present invention has been made in an effort to provide a reduced-activation austenitic stainless steel containing tantalum and a method of manufacturing the same having advantages of improving reduced-activation properties and stability of an austenitic matrix by replacing nickel in the austenitic matrix with manganese (Mn).

The present invention has been made in an effort to provide a reduced-activation austenitic stainless steel containing tantalum and a method of manufacturing the same having advantages of containing nano-sized precipitates uniformly distributed in an austenitic matrix with a high number density.

The present invention has been made in an effort to provide a reduced-activation austenitic stainless steel containing tantalum and a method of manufacturing the same having advantages of uniformly distributing a large amount of fine nano-sized tantalum carbide (TaC) in a matrix in an austenitic stainless steel.

The present invention has been made in an effort to provide a reduced-activation austenitic stainless steel containing tantalum and a method of manufacturing the same having advantages of improving irradiation resistance to neutrons of an austenitic stainless steel.

The present invention has been made in an effort to provide a reduced-activation austenitic stainless steel containing tantalum and a method of manufacturing the same having advantages of improving creep resistance of an austenitic stainless steel.

The present invention has been made in an effort to provide a reduced-activation austenitic stainless steel containing tantalum and a method of manufacturing the same having advantages of improving mechanical properties such as high-temperature strength of an austenitic stainless steel.

The present invention has been made in an effort to provide a reduced-activation austenitic stainless steel containing tantalum and a method of manufacturing the same having advantages of reducing a manufacturing cost of an austenitic stainless steel.

The present invention has been made in an effort to provide a reduced-activation austenitic stainless steel containing tantalum and a method of manufacturing the same having advantages of improving productivity of an austenitic stainless steel.

Exemplary embodiments according to the present invention may be used to achieve other objects which are not mentioned in detail in addition to the objects.

**[Technical Solution]**

An austenitic stainless steel may have only a single-phase austenitic matrix structure.

An exemplary embodiment of the present invention provides a method of manufacturing an austenitic stainless steel, the method including: a melting and casting step of melting a mixed steel material containing 14 to 19 wt% of chromium (Cr), 2 to 10 wt.% of nickel (Ni), 2 to 20 wt.% of manganese (Mn), 0.01 to 0.1 wt.% of carbon (C), and 0.1 to 1 wt.% of tantalum (Ta) and casting the molten mixed steel material to form a cast steel material having an austenitic matrix structure; a step of deriving a non-recrystallization temperature by evaluating a high-temperature strain behavior of the cast steel material; a step of performing a homogenizing heat treatment on the cast steel material; a multi-pass hot rolling step of performing one or more passes of hot rolling at a temperature higher than the non-recrystallization temperature, and then performing one or more passes of hot rolling at a temperature lower than the non-recrystallization temperature; and a step of precipitating fine tantalum carbide in the austenitic matrix structure by performing a heat treatment on the hot-rolled cast steel material and then air-cooling the hot-rolled cast steel material, wherein the fine tantalum carbide is uniformly dispersed in the austenitic matrix structure.

In the multi-pass hot rolling step, five to fifteen passes of hot rolling may be performed.

Three to ten passes of hot rolling may be performed at a temperature higher than the non-recrystallization temperature, and then two to five passes of hot rolling may be performed at a temperature lower than the non-recrystallization temperature.

A running temperature may be lowered by 10 to 50°C for each pass while the passes of the hot rolling are sequentially performed.

In the step of deriving the non-recrystallization temperature, a high-temperature strain behavior of the cast steel material may be evaluated by a hot torsion test or a dynamic physical property test.

**[Advantageous Effects]**

In the reduced-activation austenitic stainless steel containing tantalum according to an exemplary embodiment, fine TaC nano carbide is precipitated in the matrix structure, such that thermal stability at a high temperature is excellent, and tensile strength and creep resistance are excellent. Therefore, the reduced-activation austenitic stainless steel containing tantalum may be used for a nuclear fusion reactor.

In the reduced-activation austenitic stainless steel containing tantalum and the method of manufacturing the same according to an exemplary embodiment, nano-sized fine tantalum carbide may be uniformly distributed in the austenitic matrix having a paramagnetic property, such that irradiation resistance of the reduced-activation austenitic stainless steel to neutrons may be improved, creep resistance, mechanical properties such as high-temperature strength, and weldability may be improved, a manufacturing cost of the austenitic stainless steel may be reduced, and productivity may be improved.

The reduced-activation austenitic stainless steel containing tantalum according to an exemplary embodiment may have reduced-activation properties and excellent irradiation resistance, and thus may be applied to a structural material for a blanket of a nuclear fusion reactor.

In addition, the reduced-activation austenitic stainless steel containing tantalum according to an exemplary embodiment has remarkably improved mechanical properties at a high temperature, and thus may be effectively used in a nuclear power plant including a nuclear fusion reactor or a high-temperature and high-pressure part of a high-speed breeder reactor.

[Description of the Drawings]

FIG. 1 illustrates main matrix phase formation boundaries according to chromium, nickel, and manganese, and matrix phases according to chemical compositions of Examples 1 to 3 and Comparative Example 1.

FIG. 2 is a flow chart illustrating a method of manufacturing a reduced-activation austenitic stainless steel containing tantalum according to an exemplary embodiment.

FIGS. 3A and 3B are graphs showing results of a high-pressure compression test in a step of deriving a non-recrystallization temperature of Examples 1 to 3 and Comparative Example 1.

FIG. 4 is a schematic view illustrating a manufacturing process and conditions of the reduced-activation austenitic stainless steel containing tantalum according to Examples 1 to 3 and Comparative Example 1.

FIG. 5 illustrates microstructure photographs of the reduced-activation austenitic stainless steels containing tantalum according to Examples 1 to 3 and Comparative Example 1 observed with a transmission electron microscope.

FIG. 6 illustrates microstructure photographs of the reduced-activation austenitic stainless steels containing tantalum according to Examples 1 to 3 and Comparative Example 2 observed with a transmission electron microscope.

[Mode for Invention]

Exemplary embodiments of the present invention will be described in detail with reference to the accompanying drawings so that those skilled in the art to which the present invention pertains may easily implement the present invention. However, the present invention may be implemented in various different forms and is not limited to exemplary embodiments described herein. Parts irrelevant to description are omitted in the drawings in order to clearly explain the present invention. The same or similar components are denoted by the same reference numerals throughout the specification. In addition, a detailed description of a well-known technique will be omitted.

Throughout the specification, unless explicitly described to the contrary, "comprising" any components will be understood to imply the inclusion of other components rather than the exclusion of any other components.

A reduced-activation austenitic stainless steel according to exemplary embodiments contains about 14 to 19 wt.% of chromium (Cr), about 2 to 10 wt.% of nickel (Ni), about 2 to 20 wt.% of manganese (Mn), about 0.01 to 0.1 wt.% of carbon (C), and about 0.1 to 1 wt.% of tantalum (Ta).

The reduced-activation austenitic stainless steel may have only a single-phase austenitic matrix structure having a paramagnetic property.

The reduced-activation austenitic stainless steel may contain nano-sized precipitates uniformly distributed in a matrix with a high number density.

The nano-sized precipitates may be uniformly dispersed in the austenitic matrix structure in a large amount.

The reduced-activation austenitic stainless steel may contain about 14 to 19 wt.% of chromium (Cr).

Chromium is a ferrite stabilizing element, and is an essential element in a stainless steel material used in a high-temperature and high-pressure environment in which oxidation resistance, corrosion resistance, and creep strength need to be excellent at the same time.

When a content of chromium in the reduced-activation austenitic stainless steel is less than about 14 wt.%, high-temperature oxidation resistance and corrosion resistance of the stainless steel may be deteriorated. In addition, when the content of chromium in the reduced-activation austenitic stainless steel exceeds about 19 wt.%, a delta ferrite structure is formed, such that stability of the austenitic matrix is deteriorated and an abnormal structure is formed. Therefore, a ferromagnetic property may be exhibited. In addition, stability of an austenite phase at a high temperature may be deteriorated, resulting in deterioration of creep strength and toughness.

The reduced-activation austenitic stainless steel may contain about 2 to 10 wt.% of nickel (Ni).

Nickel may improve corrosion resistance of the austenitic stainless steel in a non-oxidizing atmosphere, and has resistance to stress corrosion cracking by increasing stacking fault energy. Nickel is an essential element for securing a stable austenitic structure, and is an essential element for securing structure stability during long-term use to obtain desired creep strength.

In order for the austenitic stainless steel to have a single crystal structure, a content of nickel may be determined through a thermodynamic calculation depending on the contents of manganese, chromium, and nickel. For example, the content of nickel may be controlled in a range of about 2 to 10 wt.%.

When the content of nickel in the reduced-activation austenitic stainless steel is less than about 2 wt.%, it may be difficult to secure a stable austenitic structure. In addition, when the content of nickel in the reduced-activation austenitic stainless steel exceeds about 10 wt.%, it may not be applicable to an internal structure of a nuclear fusion reactor because it exceeds the reduced-activation criteria. In addition, when the stainless steel is exposed to high-energy neutrons for a long period of time, helium gas generated by nuclear transformation of nickel may cause deterioration of mechanical properties of the stainless steel.

The reduced-activation austenitic stainless steel may contain about 2 to 20 wt.% of manganese (Mn).

Manganese is a reduced-activation element that may stabilize a typical austenite phase, and has a solid solution strengthening property. In addition, manganese contributes to deoxidation in the manufacturing of the austenitic stainless steel, and controls a diffusion rate of tantalum in an austenitic matrix to prevent coarsening of precipitates.

When a content of manganese in the reduced-activation austenitic stainless steel is less than about 2 wt.%, the austenite phase may not be stabilized in the concept of the reduced-activation, refinement of the precipitates may not be significantly affected, and the strength of the stainless steel may be reduced. However, when manganese is excessive, the stability of the austenite phase is rather deteriorated, and a ferrite phase is thus formed, which causes deterioration of the non-magnetic property. Therefore, an upper limit of the content of manganese is limited to 20 wt.% or less.

The reduced-activation austenitic stainless steel may contain about 0.01 to 0.1 wt.% of carbon (C).

Carbon is an element having an effect of stabilizing the austenite phase, and is supersaturated in the stainless steel and combined with a tantalum element during a heat treatment process or a cooling process to produce precipitates, thereby improving the strength of the stainless steel. Therefore, from the viewpoint of securing high-temperature strength, it is preferable that the stainless steel contains carbon in an amount appropriate to the amount of carbide-forming element because the stainless steel may be strengthened by precipitation of carbide in crystal grains. In addition, carbon is combined with the tantalum element, such that properties such as room temperature strength, high-temperature strength, weldability, irradiation resistance, and creep resistance of the stainless steel may be improved.

When a content of carbon in the reduced-activation austenitic stainless steel is less than about 0.01 wt.%, mechanical strength properties of the stainless steel at room temperature may be deteriorated, and the stability of the austenite phase may be deteriorated. When the content of carbon exceeds about 0.1 wt.%, the weldability and formability of the stainless steel may be deteriorated, toughness of the stainless steel may be deteriorated, and coarsened carbide may be formed.

The reduced-activation austenitic stainless steel may contain about 0.1 to 1 wt.% of tantalum (Ta).

The tantalum element is a typical reduced-activation element and a strong carbide-forming element, and may be combined with carbon to form nano-sized fine tantalum carbide. Here, fine tantalum carbide may be uniformly dispersed in the austenitic matrix structure. The fine tantalum carbide uniformly dispersed in the austenitic matrix structure may significantly improve mechanical properties such as strength of the stainless steel, may improve neutron irradiation resistance, and may improve creep resistance. In addition, tantalum stabilizes carbon in the matrix, such that the formation of chromium carbide produced at a high temperature is delayed, thereby improving hot workability and improving pitting resistance.

When a content of tantalum in the reduced-activation austenitic stainless steel is less than about 0.1 wt.%, the amount of tantalum carbide precipitated is small, such that the improvement in mechanical properties or irradiation resistance of the stainless steel may be insignificant. In addition, when the content of tantalum in the reduced-activation austenitic stainless steel exceeds about 1 wt.%, tantalum carbide having a coarse particle size may be formed, such that it may be difficult to form a large amount of fine carbide, and the strength and toughness of the stainless steel may be deteriorated.

The reduced-activation austenitic stainless steel may contain more than 0 wt.% and about 0.3 wt.% or less of silicon (Si).

Silicon may perform a deoxidation function and may increase the amount of carbide precipitated. However, since silicon may agglomerate and coarsen precipitates, a content of silicon in the stainless steel may be about 0.3 wt.% or less for micronization of the precipitates.

The reduced-activation austenitic stainless steel may contain more than 0 wt.% and about 0.01 wt.% or less of phosphorus (P) and more than 0 wt.% and about 0.01 wt.% or less of sulfur (S).

Phosphorus and sulfur are unavoidably impurities present in the stainless steel, and when contents of phosphorus and sulfur are high, the phosphorus and sulfur tend to segregate in a grain boundary, which may cause grain boundary embrittlement and deterioration of properties such as toughness. Therefore, the contents of phosphorus and sulfur may be limited to about 0.01 wt.% and about 0.01 wt.% or less, respectively.

Meanwhile, it is known by various researchers that, in the austenitic stainless steel, when the stacking fault energy according to the elements is low, a phenomenon in which transformation into a martensite phase having a magnetic property occurs through processing. Numerous studies have been conducted on the relationship between the chemical composition and stability of the austenite phase in the austenitic stainless steel, and several relational expressions for the stacking fault energy, the martensite phase formation temperature, and the like have been suggested. However, in a case of an austenitic stainless steel in which a content of manganese is high, the criteria for forming an austenite phase having secured stability have not been clearly examined even when processing is performed.

Therefore, in order to prevent formation of a processing-induced martensite phase, the present inventors have modified a stacking fault energy relational expression according to a specific element suggested in the technical article (R. E. Schramm et al., Metallurgical Transactions A 6 (1975), pp. 1,345) by Schram, which is presented experimentally. The result obtained is the following Expression 1. In Expression 1, a value of the stacking fault energy represents a relationship between the chemical compositions for securing the stability of the austenite phase (difficulty in occurrence of processing-induced martensitic transformation) in the reduced-activation austenitic stainless steel. For example, Expression 1 may be set based on a value of stacking fault energy of 25 mJ/m$^2$ at which the formation of the martensite phase may be inhibited. Expression 1 represents a criterion of the main element for forming a single austenite phase. In addition, molybdenum (Mo) may be excluded so that the austenitic stainless steel according to an exemplary embodiment may serve as a nuclear fusion material.

## [Expression 1]

$$78 < 6.2\,[\text{Ni}] + 0.7\,[\text{Cr}] + 3.2\,[\text{Mn}]$$

In Expression 1, each element symbol indicates a content (wt.%) of each element, and a unit of the calculated stacking fault energy is mJ/m$^2$.

Meanwhile, in a general austenitic stainless steel, manganese is an element that stabilizes the austenite phase. Therefore, a stainless steel having an advantage in manufacturing cost by replacing expensive nickel with manganese, such as 200 series stainless steel, has been manufactured.

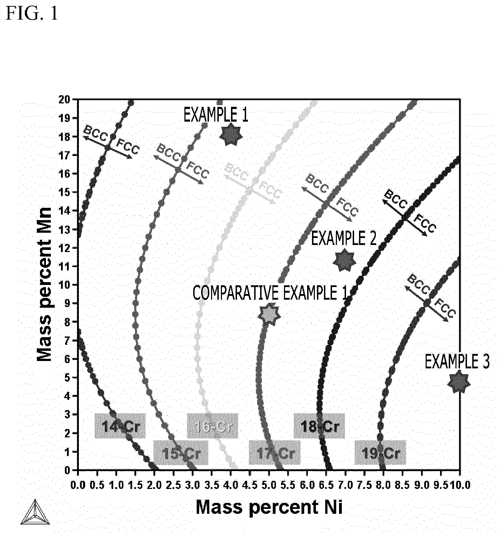

However, according to an exemplary embodiment, as the content of manganese is increased, the behavior thereof does not depend on an equivalent content of nickel, and the behavior becomes reversed from a certain content of manganese. For example, as illustrated in FIG. 1, at 15 wt.% of chromium, manganese serves to stabilize the austenite phase when the content thereof is increased to about 8.4 wt.%, and on the contrary, manganese serves to stabilize the ferrite phase in a region in which the content of manganese exceeds about 8.4 wt.%.

That is, it can be appreciated that as the content of manganese is increased, manganese acts as an element for stabilizing the ferrite phase from an element for stabilizing the austenite phase. Therefore, in the reduced-activation austenitic stainless steel according to an exemplary embodiment, in order to have a single crystal structure, the contents of manganese, chromium, and nickel may satisfy the following Expression 2. Expression 2 represents a criterion of the main element for securing the stability of the austenite phase.

## [Expression 2]

$$106.5 > -2.7\,[\text{Ni}] + 6.5\,[\text{Cr}] + [\text{Mn}]$$

In Expression 2, each element symbol indicates a content (wt.%) of each element.

In addition, in the austenitic stainless steel according to an exemplary embodiment, tantalum forming fine carbide has a close relationship with the stability of the austenite phase. In general, by performing the homogenizing heat treatment in the manufacturing of the austenitic stainless steel, a dendrite and unintended carbide of the cast steel material are melted in the matrix, and an austenite single phase is formed, such that a subsequent hot rolling process may be effectively performed.

Therefore, a temperature at which carbide starts to form needs to be set to below a temperature of the homogenizing heat treatment previously performed, and as the content of the carbide-forming element is increased, the temperature at which carbide is formed is increased. Thus, it is required to control the carbide-forming element that affects the temperature at which carbide is formed according to the stabilized temperature range of the austenite phase. Accordingly, in the reduced-activation austenitic stainless steel according to an exemplary embodiment, the content of tantalum for forming fine tantalum carbide may satisfy the following Expression 3. Expression 3 represents a criterion of the tantalum element for forming a large amount of fine carbide.

## [Expression 3]

$$0.1 < [Ta] < \{(106.5 + 2.7\,[Ni] - 6.5\,[Cr] - 0.71\,[Mn])/38\}$$

In Expression 3, each element symbol indicates a content (wt.%) of each element.

When the content of tantalum is less than 0.1 wt.%, an effective influence on physical properties exhibited by the formation of carbide may not be obtained. In addition, when the content of tantalum exceeds the maximum allowable content of the right term in Expression 3, coarse carbide generated in the casting step may be formed, and coarse carbide is formed in the homogenizing heat treatment, which may cause a limitation in forming a large amount of carbide in a subsequent carbide formation heat treatment step. In addition, the improvement of physical properties resulting from the formation of a large amount of fine carbide may be deteriorated.

Furthermore, in the reduced-activation austenitic stainless steel according to an exemplary embodiment, a weight ratio of the carbide-forming element (tantalum) to the interstitial element (carbon) is preferably 8 to 15 and may satisfy the following Expression 4. Expression 4 represents a criterion of the carbon element for forming a large amount of fine carbide.

## [Expression 4]

$$8 \leq [Ta]/[C] \leq 15$$

In Expression 4, each element symbol indicates a content (wt.%) of each element.

When the weight ratio of the carbide-forming element (tantalum) to the interstitial element (carbon) is less than 8, a desired density of carbide may not be obtained due to bonding between the chromium and the interstitial element, and corrosion resistance may be deteriorated due to the lack of chromium in the austenitic matrix. In addition, when the weight ratio of tantalum to carbon is excessively low, coarse carbide generated in the casting step may be formed, which may cause a limitation in forming a large amount of carbide in the carbide formation heat treatment step. On the other hand, when the weight ratio of the carbide-forming element (tantalum) to the interstitial element (carbon) exceeds 15, an excessively small amount of carbide is generated, which may cause an insufficient influence of the carbide on physical properties of the material.

An average size of the fine tantalum carbide may be about 6 nm or less. In addition, in the austenitic matrix structure, a number density of the fine tantalum carbide may be about $5 \times 10^{14}$ - $5 \times 10^{15}$ #/m$^2$, and a density of the fine tantalum carbide may be $5 \times 10^{21}$ - $5 \times 10^{22}$ #/m$^3$. Within these ranges, mechanical properties, neutron irradiation resistance, creep resistance, and the like of the stainless steel may be further improved.

Hereinafter, a method of manufacturing a reduced-activation austenitic stainless steel containing tantalum according to an exemplary embodiment will be described with reference to the drawings.

The constituent elements and contents of the stainless steel have been described above, the description thereof may be omitted below.

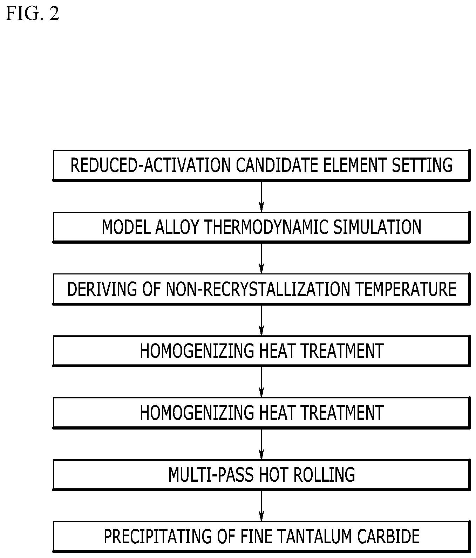

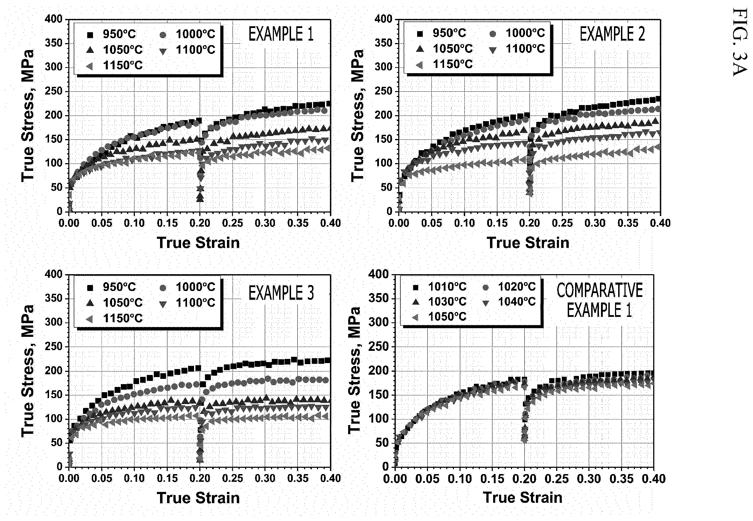

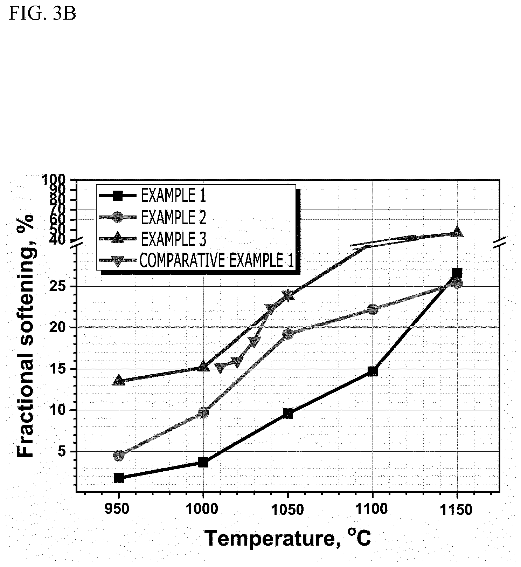

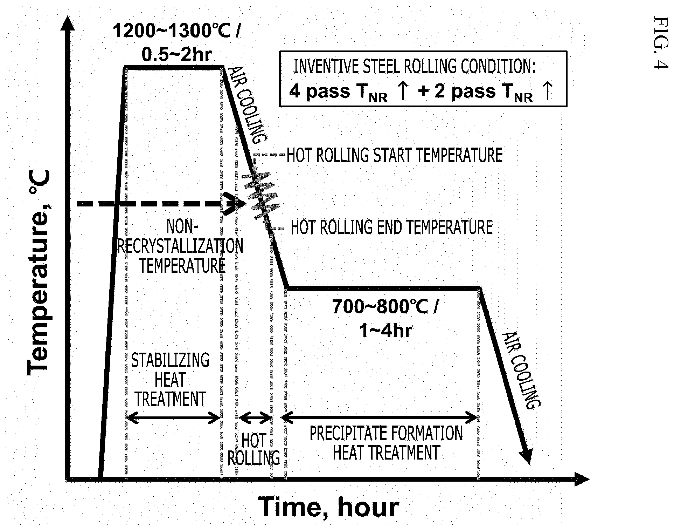

FIG. 2 is a flow chart illustrating a method of manufacturing a reduced-activation austenitic stainless steel according to an exemplary embodiment, FIGS. 3A and 3B are graphs showing a process of deriving a non-recrystallization temperature and results of Examples 1 to 3 and Comparative Example 1, and FIG. 4 is a schematic view illustrating the manufacturing process and conditions of the reduced-activation austenitic stainless steel according to Examples 1 to 3 and Comparative Example 1.

Referring to FIGS. 2 to 4, the method of manufacturing an austenitic stainless steel includes a reduced-activation candidate element setting step, a model alloy thermodynamic simulation step, a melting and casting step, a step of deriving a non-recrystallization temperature, a homogenizing heat treatment step, a multi-pass hot rolling step, and a step of precipitating fine tantalum carbide.

First, the reduced-activation candidate element setting step and the model alloy thermodynamic simulation step are performed, and then, the melting and casting step is performed.

In the melting and casting step, a mixed steel material containing 14 to 19 wt.% of chromium (Cr), 2 to 10 wt.% of nickel (Ni), 2 to 20 wt.% of manganese (Mn), 0.01 to 0.1 wt.% of carbon (C), and 0.1 to 1 wt.% of tantalum (Ta) is melted, and the molten mixed steel material is cast, thereby forming a cast steel material having an austenitic matrix structure.

Here, the mixed steel material may further contain more than 0 wt.% and 0.3 wt.% or less of silicon (Si). The mixed steel material may further contain more than 0 wt.% and 0.01 wt.% or less of phosphorus (P), more than 0 wt.% and 0.01 wt.% or less of sulfur (S), a balance of iron (Fe), and unavoidably impurities.

The melting step may be a known step. For example, a vacuum induction melting step may be applied, but the present invention is not particularly limited thereto.

A known step may also be applied to the casting step. For example, the mixed steel material may be cast in the form of an ingot, but is not particularly limited thereto.

In the melting and casting step, an austenitic matrix structure may be formed.

Next, a step of deriving a non-recrystallization temperature ($T_{NR}$) by evaluating a high-temperature strain behavior of the cast steel material formed in the melting and casting step is performed.

The high-temperature strain behavior of the cast steel material may be evaluated by a hot torsion test or a dynamic physical property test. For example, in order to evaluate the high-temperature strain behavior of the cast steel material, a Gleeble dynamic physical property tester may be used and the non-recrystallization temperature may be derived by a Gleeble compression test. A Gleeble compression test method is disclosed in a known article (for example, C. N. Homsher, "Determination of the Non-Recrystallization Temperature (TNR) in Multiple Microalloyed Steels," Colorado School of Mines, 2012).

Subsequently, the homogenizing heat treatment step is performed.

By performing the homogenizing heat treatment, a dendrite and unintended carbide of the cast steel material may be melted in the matrix, and an austenite single phase is formed at the corresponding heat treatment temperature region, such that a subsequent multi-pass hot rolling step may be effectively performed. Therefore, in the fine tantalum carbide precipitation step, fine precipitates may be finely and homogeneously distributed in the matrix.

In this step, the cast steel material may be subjected to a homogenizing heat treatment at a temperature range of about 1,200 to 1,300°C for about 30 minutes to 2 hours.

When the heat treatment is performed at a temperature lower than about 1,200°C, re-melting of a dendrite and primary carbide is not sufficiently performed, which may be disadvantageous to homogenization of the alloying element. When the heat treatment is performed at a temperature higher than about 1,300°C, a manufacturing cost is increased, the austenitic matrix may be locally melted, which may cause deterioration of microstructural homogeneity of the austenitic matrix.

When the heat treatment is performed for shorter than about 30 minutes, re-melting of a dendrite and unintended carbide is not sufficiently performed, and solute atoms may be insufficiently diffused. When the heat treatment time is longer than about 2 hours, grains may be coarsened, and the manufacturing cost may be increased.

Within the temperature range and the time range of the homogenizing heat treatment described above, when the heat treatment temperature is increased, the heat treatment time may be shortened correspondingly, and when the heat treatment temperature is decreased, the heat treatment time may be lengthened correspondingly.

Next, the cast steel material subjected to the homogenizing heat treatment may be cooled in air or water, and the multi-pass hot rolling step may be performed at a designed hot rolling start temperature.

The multi-pass hot rolling step is a step of performing one or more passes of hot rolling at a temperature higher than the non-recrystallization temperature, and then performing one or more passes of hot rolling at a temperature lower than the non-recrystallization temperature, based on the non-recrystallization temperature derived described above. Here, the multi-pass hot rolling step may mean that hot rolling is performed stepwise by being divided into a plurality of sections, and each section may be defined as a pass.

For example, a total of five to fifteen passes of hot rolling may be performed. Specifically, three to ten passes of hot rolling may be performed at a temperature higher than the non-recrystallization temperature, and then two to five passes of hot rolling may be performed at a temperature lower than the non-recrystallization temperature.

In a process of manufacturing an austenitic stainless steel containing a carbide-forming element according to the related art, the hot rolling step is performed at a temperature higher than the non-recrystallization temperature.

On the other hand, in the method of manufacturing an austenitic stainless steel according to exemplary embodiments, the hot rolling is performed even at a temperature higher than the non-recrystallization temperature, and the hot rolling is performed even at a temperature lower than the non-recrystallization temperature.

A running temperature of each pass may vary by about 10 to 50°C. For example, in a case where a plurality of passes of hot rolling are performed, the running temperature of each pass may be lowered by 10 to 0°C while the passes of the hot rolling are sequentially performed. Specifically, in a case where five passes of hot rolling are performed, a first pass hot rolling may be performed at a hot rolling start temperature that is relatively high and is higher than the non-recrystallization temperature, and a second pass hot rolling may be performed at a temperature lower than the first pass hot rolling temperature by about 10 to 50°C. Next, a third pass hot rolling may be performed at a temperature lower than the second pass hot rolling temperature by about 10 to 50°C, and a fourth pass hot rolling may be performed at a temperature lower than the third pass hot rolling temperature by about 10 to 50°C and lower than the non-recrystallization temperature. Finally, a fifth pass hot rolling may be performed at a hot rolling end temperature lower than the fourth pass hot rolling temperature by about 10 to 50°C.

FIG. 4 illustrates a multi-pass hot rolling step in which four passes of hot rolling are performed at a temperature higher than the non-recrystallization temperature and two passes of hot rolling are performed at a temperature lower than the non-recrystallization temperature.

Dislocations in the matrix may be appropriately distributed by such stepwise multi-pass hot rolling, and fine tantalum carbide may be finely and uniformly dispersed correspondingly.

A reduction ratio of the cast steel material by performing the multi-pass hot rolling step may be designed as required, and thus, a thickness may be adjusted.

Next, a step of precipitating fine tantalum carbide (TaC) in the austenitic matrix structure may be performed.

This step is a step of performing a precipitate formation heat treatment on the steel material subjected to the multi-pass hot rolling step at about 700 to 850°C for about 1 hour to 4 hours, and then air cooling the steel material. In this procedure, nano-sized fine tantalum carbide is precipitated, and the fine tantalum carbide is uniformly distributed in the matrix.

When a precipitate formation heat treatment temperature is lower than about 700°C, the amount of tantalum carbide precipitated may be too small. In addition, when a stabilizing heat treatment temperature is higher than about 850°C, a cell structure is formed due to a shift of dislocation in the matrix. At this time, the tantalum carbide may not be homogeneously distributed in the matrix and is precipitated along the boundary of the cell structure, which may cause deterioration of toughness of the stainless steel and thus may cause cracks.

In the case of a method of manufacturing an austenitic stainless steel containing a carbide-forming element according to the related art, a precipitate formation heat treatment is performed at a relatively high temperature of about 900°C, such that coarsening of precipitates and heterogeneous distribution may occur. However, according to the method of manufacturing a stainless steel according to exemplary embodiments, the stabilizing heat treatment is performed at an appropriate temperature of about 700 to 850°C at which tantalum carbide is formed, such that nano-sized fine tantalum carbide may be homogeneously and uniformly precipitated and distributed in the austenitic matrix structure.

When a precipitate formation heat treatment time is shorter than about 1 hour, the amount of tantalum carbide precipitated may be excessively low. When the precipitate formation heat treatment time is longer than about 4 hours, tantalum carbide may be coarsened, and corrosion resistance of the stainless steel may be deteriorated due to $M_{23}C_6$ carbide formed in a tantalum depleted region. Here, M may include elements such as chromium and iron.

After the precipitate formation heat treatment, the steel material may be cooled by an air cooling method instead of a water cooling method or a quenching method so as to form a fine tantalum carbide nucleus in the austenitic matrix by utilizing a difference in solubility of elements in the matrix depending on the temperature, thereby manufacturing a reduced-activation austenitic stainless steel in which fine tantalum carbide is uniformly distributed in the matrix with a high number density.

Hereinafter, the present invention will be described in more detail with reference to Examples, but the following Examples are merely Examples of the present invention, and the present invention is not limited to the following Examples.

**Examples 1 to 3 and Comparative Example 1**

**1) Casting**

Table 1 shows alloy compositions of each of specimens according to examples and a comparative example.

A mixed steel material having a compositional component shown in Table 1 was melted and cast using a vacuum induction melting furnace to form a cast ingot.

Table 1 shows chemical composition values measured by an ICP-AES analysis method, and the unit of each numerical value is wt.%.

[Table 1]

|  | Fe | Cr | Ni | Mn | C | Ta | Si | P | s |
|---|---|---|---|---|---|---|---|---|---|
| Example 1 | Bal. | 15.15 | 4.10 | 18.34 | 0.016 | 0.12 | 0.25 | 0.001 | 0.003 |
| Example 2 | Bal. | 15.13 | 7.17 | 11.16 | 0.039 | 0.48 | 0.22 | 0.001 | 0.002 |
| Example 3 | Bal. | 14.82 | 9.95 | 4.74 | 0.057 | 0.79 | 0.29 | 0.001 | 0.001 |
| Comparative Example 1 | Bal. | 15.20 | 5.01 | 8.09 | 0.029 | 0.20 | 0.16 | 0.001 | 0.004 |

Table 2 shows calculation result values for the criterion for securing the stability of the austenite phase and the criterion for the carbide-forming element in consideration of each of the elements shown in Table 1 and Expressions 1 to 4.

[Table 2]

|  | Expression 1 | Expression 2 | Expression 3 | Expression 4 |
|---|---|---|---|---|
| Example 1 | 94.7 | 105.7 | 0.16 | 8.1 |
| Example 2 | 90.8 | 90.1 | 0.52 | 12.3 |
| Example 3 | 87.2 | 74.2 | 0.89 | 13.9 |
| Comparative Example 1 | 67.6 | 93.4 | 0.41 | 6.9 |

Expression 1: $78 < 6.2\,[Ni] + 0.7\,[Cr] + 3.2\,[Mn]$
Expression 2: $106.5 > -2.7\,[Ni] + 6.5\,[Cr] + [Mn]$
Expression 3: $0.1 < [Ta] < \{(106.5 + 2.7\,[Ni] - 6.5\,[Cr] - 0.71\,[Mn])/38\}$
Expression 4: $8 \leq [Ta]/[C] \leq 15$

2) Non-Recrystallization Temperature ($T_{NR}$) Setting

In order to evaluate a high-temperature strain behavior, a Gleeble dynamic physical property tester (Gleeble 3800) was used in a high-temperature compression test.

The shape of the specimen was a cylindrical shape having a diameter of 10 mm and a height of 12 mm, which was a standard commonly used in a high-temperature compression test. A Gleeble compression test in Examples 1 to 3 was performed at an interval of 50°C from 950°C to 1,150°C, and a Gleeble compression test in Comparative Example 1 was performed at an interval of 10°C from 1,010°C to 1,050°C. The test was performed at a strain rate of 5 s$^{-1}$, and a high-temperature strain constitutive equation was derived from the true stress-true strain rate curve obtained in each test. In addition, the specimen was heated to a temperature of 1,200°C at a heating rate of 10 °C/sec under a high-purity argon atmosphere to prevent oxidation, the heated specimen was maintained for 10 minutes and then cooled, the cooled specimen was subjected to two times of compression tests at a test temperature, and strain of 20% was applied to the specimen for each compression. The results of the high-pressure compression test are illustrated in FIGS. 3A and 3B.

Table 3 shows the non-recrystallization temperatures of Examples 1 to 3 and Comparative Example 1 derived through the test.

[Table 3]

|  | Non-recrystallization temperature, TNR |
|---|---|
| Example 1 | 1,122°C |
| Example 2 | 1,065°C |
| Example 3 | 1,026°C |
| Comparative Example 1 | 1,032°C |

3) Homogenizing Heat Treatment

The cast ingots of Examples 1 to 3 and Comparative Example 1 obtained in step 1) were subjected to a homogenizing heat treatment at 1,270°C for 2 hours.

4) Multi-Pass Hot Rolling

Six passes of multi-pass rolling were performed in total based on each of the non-recrystallization temperatures (Examples 1 to 3 and Comparative Example 1) obtained in step 2), and the total reduction ratio thus obtained was 70%. The hot rolling start and end temperatures were set based on the non-recrystallization temperature of each specimen, four passes of hot rolling were performed at a temperature interval of about 35°C and a temperature higher than the non-recrystallization temperature, and two passes of hot rolling were also performed at a temperature interval of about 35°C and a temperature lower than the non-recrystallization temperature.

Table 4 shows the conditions of the actual hot rolling of Examples 1 to 3 and Comparative Example 1 performed in step 4).

[Table 4]

|  | Homogenizing temperature (°C) | Hot rolling start temperature (°C) | Hot rolling end temperature (°C) | Initial steel sheet thickness (mm) | Final steel sheet thickness (mm) | Reduction ratio (%) |
|---|---|---|---|---|---|---|
| Example 1 | 1,270 | 1,245 | 1,070 | 38.0 | 11.6 | 70 |
| Example 2 | 1,270 | 1,190 | 1,015 | 38.0 | 11.6 | 70 |
| Example 3 | 1,270 | 1,150 | 975 | 38.0 | 11.6 | 70 |
| Comparative Example 1 | 1,270 | 1,155 | 980 | 38.0 | 11.6 | 70 |

**5) Fine Tantalum Carbide Precipitation**

A heat treatment for forming fine tantalum carbide was performed on the steel material subjected to step 4) at 800°C for 2 hours, and air cooling was performed on the steel material, thereby manufacturing a reduced-activation austenitic stainless steel containing fine tantalum carbide.

**Comparative Example 2**

The crystal size obtained by a solution heat treatment performed at 1,100°C for 2 hours before the precipitate formation heat treatment of step 5) of Example 2 was about 40 $\mu$m, and dislocations in the austenitic matrix were removed to form a microstructure of a common austenitic stainless steel. Thereafter, a precipitate formation heat treatment corresponding to step 5) was performed at 800°C for 2 hours under the same conditions as described above, and air cooling was performed.

**Experimental Examples**

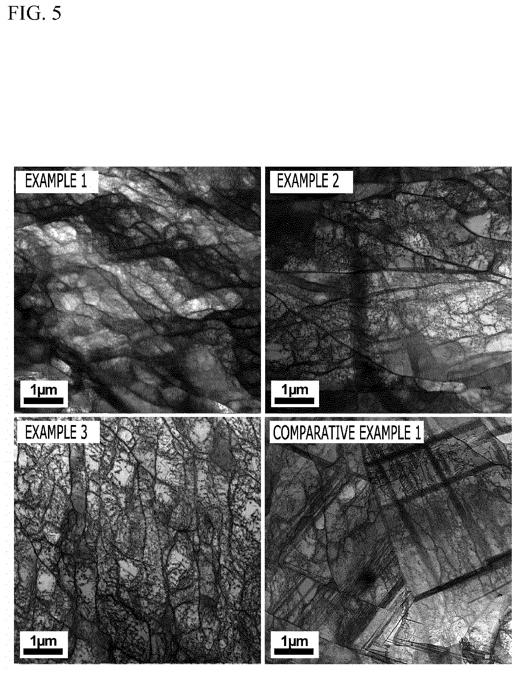

FIG. 5 illustrates microstructure photographs of the reduced-activation austenitic stainless steels containing fine tantalum carbide according to Examples 1 to 3 and Comparative Example 1 observed with a transmission electron microscope.

Referring to FIG. 5, in the case of the reduced-activation austenitic stainless steel according to Comparative Example 1, the criterion of the main element for forming the single austenite phase was not satisfied (Expression 1), but the criterion of the main element for securing the stability of the austenite phase (Expression 2) was satisfied, and thus, a processing-induced martensite phase generated during hot rolling was generated in the matrix structure.

Meanwhile, in the cases of the reduced-activation austenitic stainless steels according to Examples 1 to 3, only the austenitic matrix was still formed even though the single austenite phase was formed and hot rolling was performed.

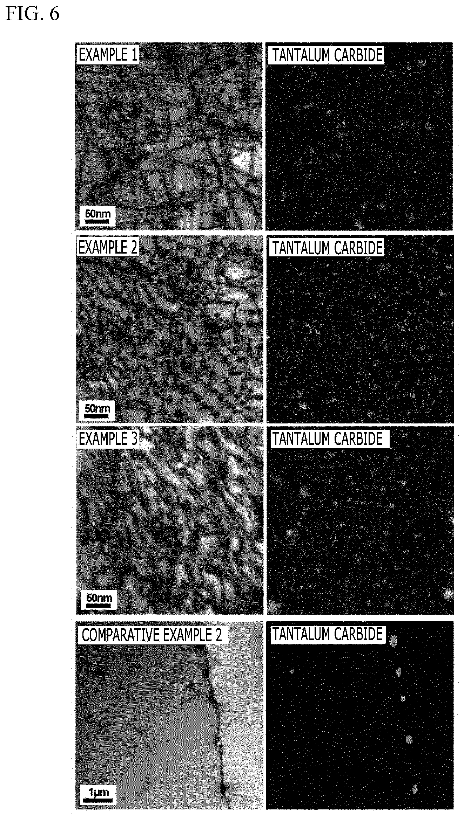

Referring to FIG. 6, in the cases of the reduced-activation austenitic stainless steels according to Examples 1 to 3, it can be seen that the fine tantalum carbide is significantly homogeneously or uniformly distributed in the austenitic matrix.

On the other hand, in the case of the reduced-activation austenitic stainless steel according to Comparative Example 2, it can be seen that the tantalum carbide is significantly heterogeneously or non-uniformly distributed in the matrix structure, coarsening occurs locally, and the density of tantalum carbide precipitates is significantly low as compared to that in Example 2.

The number densities, densities, and average sizes of the austenitic stainless steels according to Examples 1 to 3 and Comparative Example 2 are shown in Table 5.

[Table 5]

|  | Average number density (#/m$^2$) | Average density (#/m$^3$) | Average diameter (nm) |
|---|---|---|---|
| Example 1 | $5.39 \times 10^{14}$ | $6.74 \times 10^{21}$ | 5.4 |
| Example 2 | $2.18 \times 10^{15}$ | $2.73 \times 10^{22}$ | 5.7 |
| Example 3 | $2.02 \times 10^{15}$ | $2.53 \times 10^{22}$ | 5.2 |
| Compara tive Example 2 | $1.98 \times 10^{11}$ | $2.47 \times 10^{18}$ | 242 |

That is, in the cases of the reduced-activation austenitic stainless steels according to Examples, only the austenitic matrix was formed, and the stability of the austenitic matrix was secured even though processing was performed. In addition, when the multi-pass hot rolling step in which the non-recrystallization temperature was derived, and then the hot rolling was performed not only at a temperature higher than the non-recrystallization temperature but also at a temperature lower than the non-recrystallization temperature was performed, a large number of dislocations were formed and appropriately distributed in the matrix, and the precipitate formation heat treatment was performed at a temperature (700 to 850°C) at which tantalum carbide was formed, such that nano-sized fine tantalum carbide was homogeneously and uniformly precipitated and distributed in the austenitic matrix structure.

Therefore, in the cases of the stainless steels according to Examples, reduced-activation properties may be exhibited and the austenite single phase may be formed to form a paramagnetic substance, the mechanical behavior at room temperature and a high temperature may be more excellent than those in Comparative Examples while having a higher strength-to-specific gravity, and the irradiation resistance to neutrons and the creep resistance may be further significantly improved than those in Comparative Examples.

In addition, in a case where precipitates are formed at a temperature lower than a melting temperature of the matrix, the method of manufacturing a reduced-activation austenitic stainless steel containing tantalum may be applied to titanium and tungsten carbides in addition to tantalum carbide within an element range in which the reduced-activation criteria are satisfied.

In addition, the hot rolling conditions and the precipitate forming heat treatment conditions are appropriately controlled, the solid solution heat treatment step according to the related art is omitted, and the continuous multi-pass hot rolling step is applied, such that a manufacturing cost such as a heat treatment cost may be significantly reduced, and the productivity may be improved.

Although preferred exemplary embodiments of the present invention have been described in detail hereinabove, the scope of the present invention is not limited thereto, but may include several modifications and alterations made by those skilled in the art using a basic concept of the present invention as defined in the following claims.

**Claims**

1. An austenitic stainless steel comprising: 14 to 19 wt.% of chromium (Cr), 2 to 10 wt.% of nickel (Ni), 2 to 20 wt.% of manganese (Mn), 0.01 to 0.1 wt.% of carbon (C), and 0.1 to 1 wt.% of tantalum (Ta),

   wherein the austenitic stainless steel has an austenitic matrix structure,
   a fine tantalum carbide (TaC) is precipitated in the austenitic matrix structure, and
   the fine tantalum carbide is uniformly dispersed in the austenitic matrix structure.

2. The austenitic stainless steel of claim 1, wherein:
   the chromium (Cr), the nickel (Ni), and the manganese (Mn) satisfy the following Expression 1:

$$[\text{Expression 1}]$$

$$78 < 6.2\,[\text{Ni}] + 0.7\,[\text{Cr}] + 3.2\,[\text{Mn}]$$

   wherein [Ni] is wt.% of the nickel, [Cr] is wt.% of the chromium, and [Mn] is wt.% of the manganese.

3. The austenitic stainless steel of claim 1 or 2, wherein:
   the chromium (Cr), the nickel (Ni), and the manganese (Mn) satisfy the following Expression 2:

$$[\text{Expression 2}]$$

$$106.5 > -2.7\,[\text{Ni}] + 6.5\,[\text{Cr}] + [\text{Mn}]$$

   wherein [Ni] is wt.% of the nickel, [Cr] is wt.% of the chromium, and [Mn] is wt.% of the manganese.

4. The austenitic stainless steel of claim 1 or 2, wherein:
the chromium (Cr), the nickel (Ni), the manganese (Mn), and the tantalum (Ta) satisfy the following Expression 3:

[Expression 3]

$$0.1 < [Ta] < \{(106.5 + 2.7\,[Ni] - 6.5\,[Cr] - 0.71\,[Mn])/38\}$$

wherein [Ni] is wt.% of the nickel, [Cr] is wt.% of the chromium, [Mn] is wt.% of the manganese, and [Ta] is wt.% of the tantalum.

5. The austenitic stainless steel of claim 1 or 2, wherein:
the tantalum (Ta) and the carbon (C) satisfy the following Expression 4:

[Expression 4]

$$8 \leq [Ta]/[C] \leq 15$$

wherein [Ta] is wt.% of the tantalum and [C] is wt.% of the carbon.

6. The austenitic stainless steel of claim 1, wherein: an average size of the fine tantalum carbide is 6 nm or less.

7. The austenitic stainless steel of claim 1, wherein:
a number density of the fine tantalum carbide in the austenitic matrix structure is $5 \times 10^{14}$ to $5 \times 10^{15}$ #/m$^2$.

8. The austenitic stainless steel of claim 7, wherein:
a density of the fine tantalum carbide in the austenitic matrix structure is $5 \times 10^{21}$ to $5 \times 10^{22}$ #/m$^3$.

9. The austenitic stainless steel of claim 1,
further comprising 0.3 wt.% or less of silicon (Si), 0.01 wt.% or less of phosphorus (P), and 0.01 wt.% or less of sulfur (S).

10. The austenitic stainless steel of claim 1, wherein:
the austenitic stainless steel has only a single-phase austenitic matrix structure.

11. A method of manufacturing an austenitic stainless steel, the method comprising:

a melting and casting step of melting a mixed steel material having reduced-activation properties and containing 14 to 19 wt.% of chromium (Cr), 2 to 10 wt.% of nickel (Ni), 2 to 20 wt.% of manganese (Mn), 0.01 to 0.1 wt.% of carbon (C), and 0.1 to 1 wt.% of tantalum (Ta) and casting the molten mixed steel material to form a cast steel material having an austenitic matrix structure;
a step of deriving a non-recrystallization temperature by evaluating a high-temperature strain behavior of the cast steel material;
a step of performing a homogenizing heat treatment on the cast steel material;
a multi-pass hot rolling step of performing one or more passes of hot rolling at a temperature higher than the non-recrystallization temperature, and then performing one or more passes of hot rolling at a temperature lower than the non-recrystallization temperature; and
a step of precipitating fine tantalum carbide (TaC) in the austenitic matrix structure by performing a heat treatment on the hot-rolled cast steel material and then air-cooling the hot-rolled cast steel material.

12. The method of claim 11, wherein:

in the multi-pass hot rolling step,
five to fifteen passes of hot rolling are performed.

**13.** The method of claim 12, wherein:
three to ten passes of hot rolling are performed at a temperature higher than the non-recrystallization temperature, and then two to five passes of hot rolling are performed at a temperature lower than the non-recrystallization temperature.

**14.** The method of claim 13, wherein:
a running temperature is lowered by 10 to 50°C for each pass while the passes of the hot rolling are sequentially performed.

**15.** The method of claim 11, wherein:

in the step of deriving the non-recrystallization temperature,
a high-temperature strain behavior of the cast steel material is evaluated by a hot torsion test or a dynamic physical property test.

FIG. 1

FIG. 2

REDUCED-ACTIVATION CANDIDATE ELEMENT SETTING

↓

MODEL ALLOY THERMODYNAMIC SIMULATION

↓

DERIVING OF NON-RECRYSTALLIZATION TEMPERATURE

↓

HOMOGENIZING HEAT TREATMENT

↓

HOMOGENIZING HEAT TREATMENT

↓

MULTI-PASS HOT ROLLING

↓

PRECIPITATING OF FINE TANTALUM CARBIDE

FIG. 3A

FIG. 3B

FIG. 4

FIG. 5

FIG. 6

## INTERNATIONAL SEARCH REPORT

| International application No. |
| --- |
| **PCT/KR2021/004720** |

### A. CLASSIFICATION OF SUBJECT MATTER

**C22C 38/58**(2006.01)i; **C22C 1/02**(2006.01)i; **C21D 8/02**(2006.01)i

According to International Patent Classification (IPC) or to both national classification and IPC

### B. FIELDS SEARCHED

Minimum documentation searched (classification system followed by classification symbols)

C22C 38/58(2006.01); B21B 1/26(2006.01); C21D 1/26(2006.01); C22C 38/00(2006.01); C22C 38/44(2006.01); C22C 38/52(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오스테나이트계(austenite), 스테인리스(stainless), 탄탈륨(Ta), 탄화물(carbide), 크롬(Cr), 니켈(Ni), 망간(Mn), 탄소(C), 열간압연(hot rolling)

### C. DOCUMENTS CONSIDERED TO BE RELEVANT

| Category* | Citation of document, with indication, where appropriate, of the relevant passages | Relevant to claim No. |
| --- | --- | --- |
| X<br><br>Y | US 2008-0292489 A1 (YAMAMOTO et al.) 27 November 2008 (2008-11-27)<br>See claim 1. | 1-5,9-10<br><br>6-8,11-15 |
| Y | KR 10-1943591 B1 (KOREA ADVANCED INSTITUTE OF SCIENCE AND TECHNOLOGY) 30 January 2019 (2019-01-30)<br>See claims 7-12. | 6-8,11-15 |
| A | KR 10-2017-0029631 A (OUTOKUMPU OYJ) 15 March 2017 (2017-03-15)<br>See paragraphs [0007]-[0010]. | 1-15 |
| A | KR 10-2016-0082376 A (POSCO) 08 July 2016 (2016-07-08)<br>See paragraphs [0007]-[0012]. | 1-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 July 2021** | **07 July 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

EP 4 029 963 A1

**INTERNATIONAL SEARCH REPORT**

International application No.

**PCT/KR2021/004720**

**C. DOCUMENTS CONSIDERED TO BE RELEVANT**

| Category* | Citation of document, with indication, where appropriate, of the relevant passages | Relevant to claim No. |
|---|---|---|
| A | KR 10-2013-0014901 A (POSCO) 12 February 2013 (2013-02-12)<br>See paragraphs [0007]-[0015]. | 1-15 |

Form PCT/ISA/210 (second sheet) (July 2019)

23

**INTERNATIONAL SEARCH REPORT**
Information on patent family members

International application No.

**PCT/KR2021/004720**

| Patent document cited in search report | | | Publication date (day/month/year) | Patent family member(s) | | | Publication date (day/month/year) |
|---|---|---|---|---|---|---|---|
| US | 2008-0292489 | A1 | 27 November 2008 | US | 2008-0163957 | A1 | 10 July 2008 |
| | | | | US | 2008-0304996 | A1 | 11 December 2008 |
| | | | | US | 7744813 | B2 | 29 June 2010 |
| | | | | US | 7754144 | B2 | 13 July 2010 |
| | | | | US | 7754305 | B2 | 13 July 2010 |
| | | | | WO | 2008-086141 | A1 | 17 July 2008 |
| KR | 10-1943591 | B1 | 30 January 2019 | WO | 2020-101101 | A1 | 22 May 2020 |
| KR | 10-2017-0029631 | A | 15 March 2017 | CN | 106574351 | A | 19 April 2017 |
| | | | | EP | 3191612 | A1 | 19 July 2017 |
| | | | | EP | 3191612 | A4 | 24 January 2018 |
| | | | | FI | 127274 | B | 28 February 2018 |
| | | | | JP | 2017-531093 | A | 19 October 2017 |
| | | | | US | 2017-0268076 | A1 | 21 September 2017 |
| | | | | WO | 2016-027009 | A1 | 25 February 2016 |
| KR | 10-2016-0082376 | A | 08 July 2016 | | None | | |
| KR | 10-2013-0014901 | A | 12 February 2013 | KR | 10-1301331 | B1 | 29 August 2013 |

Form PCT/ISA/210 (patent family annex) (July 2019)

# EP 4 029 963 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. E. SCHRAMM et al.** *Metallurgical Transactions A,* 1975, vol. 6, 1, , 345

- **C. N. HOMSHER.** Determination of the Non-Recrystallization Temperature (TNR) in Multiple Microalloyed Steels. Colorado School of Mines, 2012